Europäisches Patentamt

European Patent Office

Office européen des brevets

(19)

(11) **EP 0 858 568 B1**

(12) **EUROPÄISCHE PATENTSCHRIFT**

(45) Veröffentlichungstag und Bekanntmachung des Hinweises auf die Patenterteilung:
**12.12.2001 Patentblatt 2001/50**

(21) Anmeldenummer: **96937299.4**

(22) Anmeldetag: **30.10.1996**

(51) Int Cl.[7]: **F16L 13/16**

(86) Internationale Anmeldenummer:
**PCT/EP96/04719**

(87) Internationale Veröffentlichungsnummer:
**WO 97/17563 (15.05.1997 Gazette 1997/21)**

(54) **VERFAHREN ZUR VERBINDUNG EINES ROHRES MIT EINEM PRESSFITTING SOWIE KOMBINATION AUS PRESSFITTING, ROHR UND PRESSGERÄT**

PROCESS FOR CONNECTING A PIPE WITH A PRESS FITTING AND COMBINATION OF PRESS FITTING, PIPE AND PRESSING DEVICE

PROCEDE DE RACCORDEMENT D'UN TUYAU AVEC UN RACCORD EMMANCHE A LA PRESSE, COMBINAISON DE RACCORD EMMANCHE A LA PRESSE, DE TUYAU ET DE PRESSE

(84) Benannte Vertragsstaaten:
**DE FR GB IT**

(30) Priorität: **04.11.1995 DE 19541216**

(43) Veröffentlichungstag der Anmeldung:
**19.08.1998 Patentblatt 1998/34**

(73) Patentinhaber: **Novo-Press GmbH Pressen und Presswerkzeuge & Co. Kg.**
**41460 Neuss (DE)**

(72) Erfinder: **PFEIFFER, Heinrich**
**D-41564 Kaarst (DE)**

(74) Vertreter: **Paul, Dieter-Alfred, Dipl.-Ing. et al**
**Paul & Albrecht**
**Patentanwaltssozietät**
**Hellersbergstrasse 18**
**41460 Neuss (DE)**

(56) Entgegenhaltungen:
**EP-A- 0 361 630          EP-A- 0 507 423**
**DE-A- 2 516 537          DE-A- 2 719 882**

**Beschreibung**

Die Erfindung betrifft ein Verfahren zur Verbindung eines Rohres mit einem Preßfitting gemäß dem Oberbegriff des Anspruchs 1 sowie eine Kombination aus Preßfitting, Rohr und Preßgerät zur Durchführung dieses Verfahrens gemäß dem Oberbegriff des Anspruchs 15.

Zum Verbinden von Rohren ist es bekannt, hülsenförmige Preßfittings zu verwenden, die aus Metall, vorzugsweise aus Stahl bestehen. Die Preßfittings werden zwecks Herstellung der Rohrverbindung über die Rohrenden geschoben und dann radial nach innen zusammengepreßt, wobei sowohl das Preßfitting als auch das Rohr plastisch verformt werden.

Aus der DE-C-1 187 870 ist ein Preßfitting bekannt, der einen Zylinderabschnitt hat und endseitig jeweils mit einem radial nach außen vorstehenden Ringwulst versehen ist. Beide Ringwulste bilden innenseitig Ringnuten, in die ein Dichtungsring eingelegt ist. Die Ringwulste laufen zum freien Ende hin jeweils in einen radial nach innen gerichteten Wulststeg aus, welcher an der Innenkante schneidförmig zugespitzt ist. Der Innendurchmesser des Zylinderabschnittes ist bei diesem Preßfitting in unverpreßtem Zustand etwas größer als der Außendurchmesser der zu verbindenden Rohre. Der Durchmesser der Schneidkanten der Wulststege ist - ebenfalls im unverpreßten Zustand - in einem Fall geringer als der Innendurchmesser des Zylinderabschnittes und im anderen Fall mit diesem gleich. Die radiale Verpressung erfolgt in beiden Fällen so, daß die jeweilige Schneidkante in das betreffende Rohr unter Bildung einer Einschnürung mit plastischer Verformung eingedrückt wird. Der Zylinderabschnitt des Preßfittings wird lediglich soweit komprimiert, daß seine Innenfläche an der Außenfläche des Rohres zur Anlage kommt, ohne das Rohr zu verformen.

Diese Art der Verbindung zwischen Rohrende und Preßfitting hat sich aus mehreren Gründen als nachteilig erwiesen. Das Eindrükken der Schneidkanten in die Rohrendbereiche hat das Entstehen hoher Kerbspannungen in den Rohrendbereichen zur Folge, was zu Brüchen in diesem Bereich und damit zu Undichtigkeiten führen kann. Außerdem ist die Verbindung für höhere Drücke nicht geeignet. Zudem steht auch die Abdichtung durch die Dichtungsringe in Gefahr, da die den Dichtungsringen gegenüberliegenden Rohrbereiche durch die Einschnürungen von den Dichtungsringen wegbewegt werden, wodurch die Dichtflächen reduziert werden.

In neuerer Zeit ist man auf Preßfittings übergegangen, wie sie sich aus der EP-B-0- 361 630, der DE-A-40 25 317, der US-A-5 007 667 und dem DE-U-92 16 369.6 ergeben. Sie haben einen Zylinderabschnitt, der im Mittenbereich eingeschnürt ist, so daß dort innenseitig Anschläge für die Rohrenden gebildet werden. In den jeweils daran nach außen anschließenden Bereichen hat der Zylinderabschnitt in unverpreßtem Zustand einen Innendurchmesser, der geringfügig größer als der Außendurchmesser der zu verbindenden Rohre ist, um Toleranzen ausgleichen zu können. Die Ringwulste an den Enden des Preßfittings haben vom Zylinderabschnitt ausgehende schräge Wulstflanken, die in Bogenabschnitte und dann in die nach innen gerichteten Wulststege übergehen. Die Innenränder der Wulststege sind nicht - wie bei dem Preßfitting nach der DE-C-1 187 870 - zugespitzt und haben einen Durchmesser, der größer ist als der Innendurchmesser der jeweils an die Ringwulste anschließenden Bereiche des Zylinderabschnittes, so daß die Wulststege in unverpreßtem Zustand Abstand zu den eingeschobenen Rohrenden haben. Dies soll einen ungehinderten Preßweg des Wulststegs sichern und so eine Behinderung der plastischen Verformung des Ringwulstes vermeiden helfen (EP-B-0 361 630).

Die Verpressung des Preßfittings und des Rohres geschieht mit Hilfe von Preßgeräten, wie sie in verschiedenen Ausführungen beispielsweise aus der EP-A-0 451 806 sowie desweiteren aus der EP-8-0 361 630 und dem DE-U-92 16 369.6 bekannt sind. Die Preßgeräte haben zwei oder mehr Preßbacken, die beim Preßvorgang radial nach innen bis zur Bildung eines geschlossenen Preßraums bewegt werden können. Wie insbesondere die beiden letztgenannten Dokumente zeigen, weisen die Preßbacken innenseitig eine Preßkontur mit einer in Umfangsrichtung verlaufenden Preßringnut auf. Die Preßringnut ist dazu bestimmt, auf den Ringwulst beim Preßvorgang einzuwirken. Zusätzlich werden durch die Preßkontur radial nach innen vorstehende Preßstege gebildet, deren Abstände zu der Preßringnut so bemessen ist, daß ein Preßsteg beim Ansetzen des Preßgerätes unmittelbar hinter dem Ringwulst an dem Zylinderabschnitt zur Anlage kommt.

Beim Preßvorgang werden die Preßbacken mit Hilfe eines entsprechenden Antriebes zusammengefahren. Dabei werden gleichzeitig sowohl der Ringwulst durch die Ringnut als auch der unmittelbar anschließende Bereich des Zylinderabschnittes durch den Preßsteg radial nach innen unter plastischer Verformung gedrückt. Hierdurch wird auch das Rohr in diesem Bereich radial nach innen unter Bildung einer einzigen Einschnürung verformt. Dabei ist unter einer Einschnürung eine solche Verformung des Rohres zu verstehen, bei der die Rohrwandung außen- und innenseitig radial nach innen versetzt wird. Sie muß sich nicht über den gesamten Umfang des Rohres erstrecken, sondern kann in mehrere, über den Umfang verteilte Abschnitte aufgeteilt sein, d. h. die Tiefe der Einschnürung kann zwischen Null und einem Maximalwert schwanken.

Die Art und die Erstreckung der Einschnürung ist von der jeweils gewählten Preßkontur der Preßbacken abhängig. So ist die Einschnürung bei der Verpressung nach der US-A-5 007 667 auf den Bereich hinter dem Ringwulst beschränkt, wobei eine vergleichsweise tiefe Einschnürung vorgesehen wird. Bei der Verpressung nach der DE-A-40 25 317 wird durch Einwirkung einerseits auf den Ringwulst und andererseits im Abstand dazu dahinter eine langgestreckte, sehr flache Einschnürung verwirklicht, die sich nahezu über die gesamte Breite der Preßbacken erstreckt.

Was den Ringwulst selbst angeht, wird bei der Verpressung nach der EP-B-0 361 630 und der US-A-5 007 667 ebenfalls eine Verformung angestrebt. Dabei wird der Ringwulst nicht nur radial, sondern auch axial gestaucht, um den Dichtungsring elastisch höher vorzuspannen. Bei der Verpressung nach der EP-B-0 361 630 wird der Ringwulst radial nur soweit der Rohrverformung nachgeführt, daß der Dichtungsring in einem für die Dichtwirkung ausreichenden Maß auf das Rohr gepreßt wird. Ein Kontakt des Innenrands des Wulststegs mit dem Rohr wird vermieden, um die Verformung des Ringwulsts nicht zu behindern und die Dichtwirkung durch den Dichtungsring nicht zu gefährden. Bei der Verpressung nach der US-A-5 007 667 wird der Ringwulst so geformt, daß sich der Wulststeg schrägstellt. Hierdurch kommt der Wulststeg in der letzten Phase der Verpressung mit seiner scharfen Innenkante an der Außenseite des Rohres in Anlage und gräbt sich ein wenig in das Rohr ein, ohne daß jedoch eine Einschnürung im Rohr eingeformt wird.

Das Preßgerät nach der EP-B-0 361 630 hat zu beiden Seiten der Ringnut jeweils einen Preßsteg, d. h. die Preßkontur ist im Querschnitt symmetrisch ausgebildet. Die symmetrische Anordnung eines zweiten Preßsteges ist für das Funktionieren der Verpressung an sich nicht erforderlich, macht es jedoch gleichgültig, in welcher Lage das Preßgerät an die zu verpressende Stelle angesetzt wird. In der Praxis hat es sich jedoch gezeigt, daß die symmetrische Ausbildung der Preßkontur dazu führt, daß der zweite, für die jeweilige Verpressung eigentlich unnötige Preßsteg in der Endphase des Preßvorgangs an dem Rohr zur Anlage kommt und dort eine Einschnürung des Rohrs zur Folge hat (Seite 2 des DE-U-92 16 369.6). Hierdurch erhöhen sich nicht nur die aufzuwendenden Preßkräfte, sondern es verringert sich auch die elastische Vorspannung des Dichtrings mit der Gefahr, daß Undichtigkeiten auftreten. In dem letztgenannten Dokument wird deshalb vorgeschlagen, von der symmetrischen Preßkontur abzugehen und nur noch einen einzigen Preßsteg für die Ausbildung der Einschnürung vorzusehen.

In der EP-B-0 361 630 wird zudem vorgeschlagen, in den Zylinderabschnitt des Preßfittings zwei oder noch mehr Einschnürungen nebeneinander einzupressen, um die Verklammerung zwischen Preßfitting und Rohr zu verbessern. Dies kann nach diesem Dokument dadurch geschehen, daß das Preßgerät nach dem ersten Preßvorgang nochmals derart angesetzt wird, daß der eine Preßsteg in der schon eingeformten Einschnürung zu liegen kommt, so daß der andere Preßsteg auf der dem Ringwulst abgewandten Seite der ersten Einschnürung eine weitere Einschnürung einformen kann. Als alternative Möglichkeit wird angesehen, die Preßbakken auf einer Seite in axialer Richtung zu verbreitern und dort mindestens einen weiteren, durch einen zylindrischen Bereich getrennt angeordneten Preßsteg vorzusehen, was den Vorteil hat, daß zwei oder mehr Einschnürungen in einem einzigen Preßvorgang eingeformt werden können. In diesem Fall soll auf der anderen Seite der Preßnut auf den dortigen Preßsteg verzichtet werden.

Das vorbeschriebene Verfahren ist nicht zum Einsatz gekommen, da die Serienpreßfittings Zylinderabschnitte mit einer axialen Erstreckung haben, die für das Vorsehen von mehreren Einschnürungen in einem solchen Abstand, daß auch in dem Rohr separate Einschnürungen entstehen, zu gering ist. Ist der Abstand der Verpressungen zu klein, bildet sich in dem Rohr jeweils nur eine einzige, langgestreckte Einschnürung aus, die keine Festigkeitsverbesserung zur Folge hat. Von Nachteil ist zudem, daß für die Durchführung dieses Verfahrens ein normales Preßgerät mehrfach angesetzt werden muß, was Zeit kostet, hohe Sorgfalt erfordert und manchmal aus Platzgründen gar nicht möglich ist. Wird das Preßgerät in dem vorbeschriebenen Sinn modifiziert, also auf einer Seite der Preßnut mit mehreren Preßstegen versehen, entsteht ein sehr voluminöses, schweres Preßgerät, dessen Einsatz aus Platzgründen nicht immer möglich ist und zudem hohe Antriebskräfte für das Zusammenführen der Preßbacken erfordert.

In der DE-A-27 19 882 ist ein Preßfitting zur Verbindung von Rohren vorgeschlagen, bei dem der Ringwulst im unverpreßten Zustand zylindrisch ausläuft. In die Ringnut des Ringwulstes ist ein elastischer Dichtungsring eingelegt, der zur offenen Seite des Ringwulstes hin mit einem Armierungsring aus Metall oder hochfestem Kunststoff eingefaßt ist. Für die Verpressung wird ein in axialer Richtung geteiltes Preßwerkzeug eingesetzt, wobei die Preßbacken des einen Preßwerkzeugs hinter dem Ringwulst eine in mehrere Abschnitte aufgeteilte Einschnürung in den Preßfitting und in das Rohr einformt. Die Preßbacken des zweiten Preßwerkzeugs werden um das Rohr gelegt und dann axial gegen die Preßbacken des ersten Preßwerkzeugs gepreßt. Hierdurch wird der äußere Abschnitt des Ringwulsts nach innen umgebogen, wobei die Armierungsringe dafür sorgen, daß der Dichtungsring nicht herausgepreßt wird. Bei der Verformung des Ringwulstes wird der Dichtungsring zusammen mit dem Armierungsring so stark zusammengepreßt, daß im Bereich des Dichtungsrings eine ringförmige Einschnürung im Rohr erzeugt wird. Hierdurch wird der Dichtungsring stark komprimiert. Dabei geschieht die Verpressung in der Weise, daß ein Eindrücken des umgebogenen Wulststeges in die Wändung des Rohres vermieden wird.

Im übrigen ist in der EP-B-0 361 630 und der US-A-5 007 667 vorgeschlagen, die radiale Verpressung über den Umfang nicht gleichmäßig durchzuführen, sondern die Preßstege in den Bereichen der stirnseitigen Enden der Preßbacken zurückzunehmen, so daß bei zwei Preßbakken eine zitronenartige Einschnürung entsteht. Auch mehrkantige Einschnürungskonturen werden erwähnt.

Bisher sind Rohrverbindungen mit Hilfe von Preßfittings nur für den Niederdruckbereich bis 16 bar hergestellt worden. Außerdem war es bisher auch erforderlich, spezielle Leitungsrohre mit eingeschränkten Toleranzen zu verwenden, damit eine sichere Verbindung zwischen Preßfitting und Rohrendbereich verwirklicht werden konnte. Wie die EP-B-0 361 630 zeigt, ist es wünschenswert, diese Art der Rohrverbindung auch bei höheren Drücken einzusetzen und/oder normale Rohre ohne eingeschränkten Toleranzbereich zu verwenden. Mit dem bekannten Verfahren ist dies nicht möglich, weil der damit erreichte Formschluß nicht ausreichend ist, selbst wenn zwei Einschnürungen gebildet werden, wie bei der Verpressung nach der DE-A-27 19 882. Bei der durch den Dichtungsring bewirkten ersten Einschnürung liegt der Scheitel zwischen den beiden Einschnürungen radial weiter nach innen versetzt als die Innenkante des Wulststeges, so daß kein Formschluß zwischen Wulststeg und erster Einschnürung geschaffen wird. Auch das Eingraben der Innenkante des Wulststeges beim Verpressen nach der US-A-5 007 667 bewirkt nur eine unwesentliche Verbesserung des Formschlusses und muß mit den gleichen Nachteilen erkauft werden wie bei der Verpressung nach der DE-C-1 187 870. Deshalb kommt auch diese Art des Formschlusses zwischen Preßfitting und Rohr für höhere Beanspruchungen nicht in Frage.

Der Erfindung liegt demnach die Aufgabe zugrunde, ein Verfahren bereitzustellen, mit dem Rohre und Preßfittings so miteinander verbunden werden können, daß die Verbindung hohen Drükken standhält. Außerdem soll das Verfahren keine hohen Qualitätsanforderungen an die Rohre stellen. Ein weiteres Ziel besteht darin, dieses Verfahren bei den auf dem Markt befindlichen Serienpreßfittings anwenden zu können. Schließlich ist es Zielsetzung der Erfindung, eine Kombination aus Preßfitting, Rohr und Preßgerät so auszubilden, daß das Verfahren ohne weitreichende Änderungen insbesondere am Preßgerät durchführbar ist.

Was das Verfahren angeht, wird die Aufgabe dadurch gelöst, daß der Wulststeg in das Rohr unter Ausformung der ersten Einschnürung eingepreßt wird.

Grundgedanke der Erfindung ist, den Formschluß zwischen Preßfitting und Rohr dadurch zu verbessern, daß in dem Rohr durch Verpressen des Preßfittings an zwei Stellen zwei Einschnürungen eingeformt werden, und zwar unter Beachtung der Besonderheiten des erfindungsgemäßen Verfahrens, bei dem zur Bildung der ersten Einschnürung der Ringwulst und hier vor allem dessen Wulststeg in der Weise herangezoge wird, daß diese Einschnürung durch den Ringwulst selbst infolge direkten Kontakts zum Rohr unter Bildung eines in Richtung auf die zweite Einschnürung radial nach außen ansteigenden Abschnitts eingeform wird. Hierdurch wird ein Formschluß zwischen Ringwulst und Rohr geschaffen. Es hat sich gezeigt, daß diese Art von Verklammerung zwischen Rohr und Preßfitting wesentlich größere Axialkräfte aufnehmen kann, so daß die Leitung mit erheblich höheren Drücken beaufschlagt werden können. Unabhängig davon stellt diese Art der Verbindung nicht mehr so hohe Anforderungen an die Toleranzen für Rohr und Preßfitting. Dabei ist von besonderem Vorteil, daß der freie Durchströmquerschnitt in dem Rohr trotz der verbesserten Axialfestigkeit nur wenig verringert wird, jedenfalls wesentlich weniger, als wenn man versucht hätte, die gleiche Axialfestigkeit mit lediglich einer Einschnürung zu erzielen.

Hinzu kommt, daß normale Serienpreßfittings zur Anwendung kommen können, da der Zylinderabschnitt solcher Preßfittings ausreichend lang ist, um die zweite Einschnürung in einem solchen Abstand von der ersten vornehmen zu können, daß zwei eigenständige Einschnürungen entstehen. Außerdem erfordert das erfindungsgemäße Verfahren keine prinzipielle Veränderung der vorhandenen Preßgeräte, sondern lediglich eine entsprechende Anpassung der Preßkontur. Dabei ist es nicht notwendig, die Preßkontur insgesamt zu verbreitern, da eine symmetrische Preßkontur nicht erforderlich ist, insbesondere wenn die Sicherheitsmaßnahme nach dem DE-U-92 16 369 vorgesehen wird. Die Preßgeräte bleiben also leicht handhabbar und sind auch unter engen Platzverhältnissen einsetzbar, wobei beide Einschnürungen in einem Preßvorgang eingeformt werden können.

Der Mittenabstand der Einschnürungen sollte so gewählt werden, daß die Einschnürungen derart voneinander separiert sind, daß jede Einschnürung einen selbständigen Formschluß erzeugt. Der Mittenabstand sollte hierfür mindestens der axialen Erstrekkung des Ringwulsts, vorzugsweise das 1,5 bis 2fache dieser Erstreckung, entsprechen, wobei unter axialer Erstreckung eine Erstreckung in Richtung der Rohrachse gemeint ist. Zweckmäßigerweise sollte der Mittenabstand Tg der Einschnürungen folgenden Bedingungen genügen:

$$Tg \leq \frac{Te + Sf}{2}$$

und

$$Tg \geq 3\sqrt{Sf^3 \times 576 \times \left(\frac{Fpmax + Fpmin}{2}\right)} - Sf,$$

wobei Te der Abstand zwischen Rohrende und Fittingende, Sf die Wandstärke des Wulststegs sowie Fpmin die minimale und Fpmax die maximale Einpreßtiefe der zweiten Einschnürung ist. Dabei sollte nach Möglichkeit ein solch geringer Abstand gewählt werden, daß gerade noch zwei eigenständige Einschnürungen entstehen, also die Einschnürungen unmittelbar, nur getrennt durch einen Scheitel, aneinander angrenzen. Ferner ist es zweckmäßig, die zweite Einschnürung tiefer einzuformen als die erste, da dies günstig für die Sicherheit der Abdichtung ist.

Nach den gemachten Erfahrungen sollte der Außendurchmesser des Ringwulstes um 6 bis 15 % und der des Zylinderabschnitts des Preßfittings um 10 bis 20 % verringert werden. Vorzugsweise sollte die erste Einschnürung eine Durchmesserverringerung des Rohres um 4 bis 15 % bewirken. Diese Bereiche haben sich bei normalen Kombinationen von Rohr und Preßfitting als günstig für die Ausbildung der Einschnürungen und die Axialfestigkeit der Verbindung erwiesen.

Nach einem weiteren Merkmal der Erfindung ist vorgesehen, daß das Verpressen mit Hilfe eines Preßgeräts erfolgt, das wenigstens zwei Preßbacken mit innenseitiger Preßkontur aufweist, die für den Verpreßvorgang um den Ringwulst gelegt und dann mit Hilfe eines Geräteantriebs derart bewegt werden, daß das Preßfitting und das Rohr plastisch radial nach innen verformt werden, wobei die Preßkontur der Preßbacken so geschaffen ist, daß Preßfitting und Rohr im Bereich der jeweils gegenüberliegenden Stirnseiten der Preßbacken am wenigsten verformt werden. Diese Verfahrensweise verhindert ein Verquetschen insbesondere des Dichtungsrings. In Sonderheit soll die Preßkontur der Preßbacken so geschaffen sein, daß Preßfitting und Rohr zu den Stirnseiten der Preßbacken hin weniger verformt werden als im Mittenbereich der Preßbacken. Sofern zwei Preßbacken vorhanden sind, sollte die Preßkontur alle 90° von einem Punkt maximaler Verpressung zu einem Punkt minimaler Verpressung wechseln.

Für die Abdichtung im Bereich des Dichtungsrings ist es von Vorteil, wenn der Ringwulst entgegen der Lehre nach der EP-B-0 361 630 nicht oder maximal um 15 % in axialer Richtung komprimiert wird. Außerdem sollte der Außenradius des Bogenabschnitts des Ringwulstes bei der Verpressung nicht oder nur maximal um 10 % verringert werden. Insgesamt ist es also wünschenswert, daß die Grundform des Ringwulstes im wesentlichen unverändert bleibt, da dies einerseits eine gute Abdichtung und andererseits eine ausgeprägte Ausbildung der Einschnürungen zur Folge hat. Dabei ist es zweckmäßig, daß die Einformung der ersten Einschnürung mittels eines stumpfen Wulststegs durchgeführt wird, um festigkeitsmindernde Einkerbungen zu vermeiden. Dies kann am einfachsten dadurch geschehen, daß der Wulststeg sich in einer Ebene senkrecht zur Rohrachse erstreckt, so daß er mit seiner planen Stirnseite flächig auf dem Rohr aufliegt.

Was die Kombination aus Preßfitting, Rohr und Preßgerät zur Durchführung des vorbeschriebenen Verfahrens angeht, wird zur Lösung der entsprechenden Aufgabe vorgeschlagen, daß der Preßbereich für den Ringwulst so ausgebildet ist, daß der Wulststeg in der Endstellung nach dem Verpressen in das Rohr unter Ausformung der ersten Einschnürung eingegraben ist. Die Vorzüge dieser gegenseitigen Anpassung von Preßgerät, Preßfitting und Rohr insbesondere hinsichtlich ihrer geometrischen Gestaltung sind im einzelnen schon oben bei der Beschreibung des erfindungsgemäßen Verfahrens dargestellt. Für die Teile der Kombination ist von besonderem Wert, daß Serienpreßfittings zur Anwendung kommen können und daß lediglich eine Anpassung der Preßkontur des Preßgeräts notwendig ist, nicht jedoch eine grundsätzliche Umkonstruierung des Preßgeräts. Es kann deshalb mit den vorhandenen Preßgeräten nach Austausch der Preßbacken oder von die Preßbackenkontur enthaltenden Preßbackenelementen weiterverwendet werden.

Der Preßsteg sollte einen freien Abstand zum Preßbereich für den Ringwulst haben, der wenigstens der axialen Erstreckung des Preßbereichs entspricht, vorzugsweise wenigstens das 1,5fache dieser Erstreckung ausmacht.

Gemäß einem weiteren Merkmal der Erfindung ist vorgeschlagen, daß die Preßkontur der Preßbacken so geformt ist, daß der Radius der Preßkontur zu den gegenüberliegenden Stirnseiten der Preßbacken hin am größten ist. Im Mittenbereich sollte der Radius der Preßkontur am geringsten sein. Soweit nur zwei Preßbacken vorgesehen sind, ist es zweckmäßiger, daß der Radius der Preßkontur im Bereich der gegenüberliegenden Stirnseiten der Preßbacken und des Mittenbereichs am größten ist. Diese Maßnahmen verhindern Quetschungen insbesondere des Dichtungsrings.

Gemäß einem weiteren Merkmal der Erfindung ist vorgesehen, daß der Preßbereich für den Ringwulst als Preßringnut ausgebildet ist, die an der dem Preßsteg abgewandten Seite unter Bildung eines Führungsstegs radial nach innen verlängert ist. Dies verhindert ein Ausweichen des Wulststegs beim Einformen der ersten Einschnürung.

Für den Fall, daß der Preßbereich für den Ringwulst als Preßringnut ausgebildet ist, empfiehlt sich darüberhinaus, die Preßringnut an die Außenkontur des Ringwulsts anzupassen, damit der Ringwulst beim verpressen nur wenig oder gar nicht verformt wird, und zwar insbesondere in dem Bogenabschnitt des Ringwulstes. Deshalb sollte der Radius der Preßringnut dem Außenradius des Bogenabschnitts entsprechen, allenfalls 10 % kleiner sein.

Um Einkerbungen in dem Rohr zu vermeiden, ist es zweckmäßig, daß der Wulststeg am Innenrand in an sich bekannter Weise stumpf ausgebildet ist, also entweder abgerundet oder - wie bei Serienpreßfittings üblich - plan ist, damit der Wulststeg flächig an dem Rohr anliegt, wenn er sich - wie üblich - in einer Ebene senkrecht zur Rohrachse erstreckt.

In der Zeichnung ist die Erfindung anhand von Ausführungsbeispielen näher veranschaulicht. Es zeigen:

Figur 1      die obere Hälfte eines Rohrendbereichs und eines Abschnitts eines darübergeschobenen Preßfittings mit Preßbacke in unverpreßtem Zustand im Längsschnitt;

Figur 2    die Schnittdarstellung gemäß Figur 1 mit einer Preßbacke nach dem Verpressen;

Figur 3    eine schematische Darstellung eines Teils eines Preßgeräts mit zwei Preßbacken in der Rückansicht;

Figur 4    einen Schnitt durch das Preßgerät gemäß Figur 4 in der Ebene A-A gemäß Figur 3;

Figur 5    die teilweise Rückansicht eines weiteren Preßgeräts mit drei Preßbacken und

Figur 6    einen Querschnitt durch das Preßgerät gemäß Figur 5 in der Ebene B-B in Figur 5.

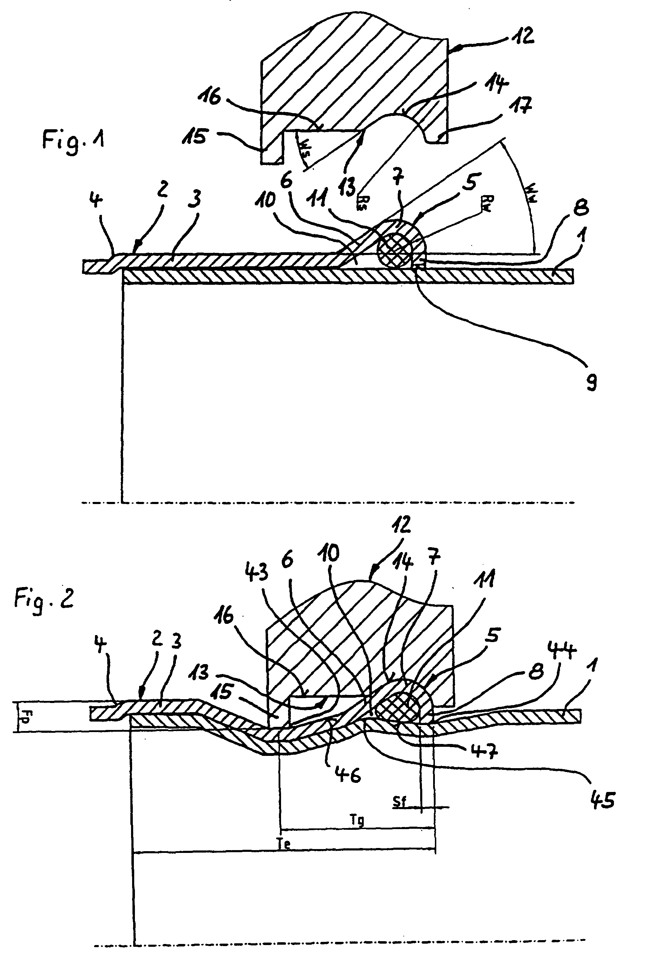

In Figur 1 ist der Endbereich eines Rohres 1 dargestellt, über das ein Preßfitting 2 um einen Betrag Te geschoben ist. Beide sind rotationssymmetrisch, so daß auf die Darstellung der unteren Hälfte verzichtet worden ist. Das Preßfitting 2 ist in axialer Richtung nur zur Hälfte dargestellt, wobei die nicht gezeigte Hälfte spiegelbildlich zu der gezeigten ausgebildet ist.

Das Rohr 1 ist zylindrisch ausgebildet. Das Preßfitting 2 hat einen Zylinderabschnitt 3, dessen Innendurchmesser um so viel größer als der Außendurchmesser des Rohres 1 ist, daß das Preßfitting 2 auch über Rohre 1 paßt, welche an der äußeren Grenze des Toleranzbereichs für das Rohr 1 liegt. Zur Mitte hin hat der Zylinderabschnitt 3 eine Stufung 4 nach innen, die als Anschlag für das Ende des Rohres 1 dient.

Zum freien Ende hin weist das Preßfitting 2 einen Ringwulst 5 auf, dessen Formgebung sich zusammensetzt aus einer sich an den Zylinderabschnitt 3 anschließenden, unter einem Winkel Ww schräg ansteigenden, geraden Wulstflanke 6, einem von dieser ausgehenden Bogenabschnitt 7 mit dem Außenradius Rw und einem an diesen anschließenden Wulststeg 8 der Wandstärke Sf. Der Wulststeg 8 ist senkrecht auf die Außenwand des Rohres 1 gerichtet und endet in einem ebenen Innenrand 9, dessen Durchmesser größer ist als der Innendurchmesser des Zylinderabschnitts 3, so daß ein Abstand zum Rohr 1 gegeben ist. Der Ringwulst 5 schließt eine zum Rohr 1 hin offene Ringnut 10 ein, in die ein elastomerer Dichtungsring 11 eingelegt ist, der im Querschnitt an die Innenkontur des Bogenabschnitts 7 angepaßt ist.

Für die Verbindung von Rohr 1 und Preßfitting 2 wird im Bereich des Ringwulstes 5 ein Preßgerät angesetzt, wie es prinzipiell aus der EP-A-0 451 806 und dem DE-U-92 16 369.6 bekannt ist. In den Figuren ist von dem Preßgerät lediglich ein geschnittener Teil einer Preßbacke 12 dargestellt. Die Preßbacke 12 hat innenseitig eine Preßkontur 13 mit einer Preßringnut 14 und einem Preßsteg 15. Preßringnut 14 und Preßsteg 15 sind durch einen Zylinderbereich 16 getrennt. Der Preßsteg 15 steht radial nach innen über den Zylinderbereich 16 vor. Die Preßringnut 14 läuft auf der dem Zylinderbereich 16 gegenüberliegenden Seite in einen Führungssteg 17 aus, der radial nach innen über den Zylinderbereich 16 vorsteht, allerdings nicht soweit, wie der Preßsteg 15. Die Querschnittsformgebung der Preßringnut 14 entspricht der Außenform des Ringwulstes 5, d. h. der Außenradius Rw des Bogenabschnitts 7 entspricht dem Innenradius Rs des bogenförmigen Abschnitts der Preßringnut 14, und dieser Abschnitt läuft auch entsprechend der Außenform des Ringwulsts 5 zu dem Zylinderbereich 16 unter dem Winkel Ws aus. Der Innenradius Rs kann auch bis zu 10 % geringer sein als der Außenradius Rw und der Winkel Ws bis zu 10 % größer sein als der Winkel Ww, so daß der Ringwulst 5 beim Verpressen unter Komprimierung des Dichtungsrings 11 verformt wird.

In Figur 3. ist der Preßbackenbereich eines Preßgeräts in der Rückansicht zu sehen, der die Preßbacke 12 enthält. Die Preßbacke 12 erstreckt sich über 180° und liegt gegenüber einer zweiten Preßbacke 18, die spiegelbildlich geformt ist. Die Preßbacken 12 und 18 liegen jeweils mit ihren gegenüberliegenden Stirnseiten 19, 20 bzw. 21, 22 aneinander an und bilden auf diese Weise einen geschlossenen Pressenraum 23.

In Figur 4 ist ein Schnitt in der Ebene A-A zu sehen, die in Figur 3 angedeutet ist. Dieser Schnitt zeigt die Preßkontur 13 der Preßbacke 12, und zwar oben an der Stirnseite 20 und unten in einer 45°-Stellung zwischen Horizontal- und Vertikalschnitt. Es ist zu erkennen, daß der Preßsteg 15 an der Stirnseite 20 wesentlich weniger nach innen vorsteht als in der 45°-Stellung, wo er seine maximale radiale Erstreckung hat. Wie Figur 3 zeigt, verläuft die Kontur des Preßstegs 15 zusammen mit dem Preßsteg 24 in der Preßbacke 18 so, daß ein gerundetes Viereck entsteht (zuinnerst liegende durchgezogene Linie), wobei die Preßstege 15, 24 in den Bereichen der Stirnseiten 19, 20 bzw. 21, 22 sowie in den Bereichen, die um jeweils 90° winkelversetzt sind, am geringsten nach innen vorstehen.

In Figur 3 zeigt die - von innen nach außen gesehen - erste gestrichelte Linie die Kontur des Führungsstegs 17 und des komplementären Führungsstegs 25 in der Preßbacke 18. Die Kontur ist kreisrund. Die zweite gestrichelte Linie bildet die Kontur des Zylinderbereichs 16 der Preßbacke 12 und des Zylinderbereichs 26 der Preßbacke 18. Durch Nachmessen der vertikalen und der horizontalen Achse kann festgestellt werden, daß die Zylinderbereiche 16, 26 nicht genau kreiszylindrisch sind, sondern im Bereich der Stirnseiten 19, 20, 21, 22 einen größeren Durchmesser haben als in den Bereichen der Horizontalebene. Entsprechendes gilt für den Nutgrund der Preßringnut 14, die sich mit der Preßringnut 27 in der Preßbacke 18 ergänzt. Auch sie ist nicht kreisrund, sondern hat in vertikaler Richtung, d. h. in der Ebene der Stirnseiten 19, 20, 21, 22 den größten Durchmesser und in der Horizontalebene den geringsten. Diese Gestaltung hat den Vorzug, daß weitestgehend Quetschungen des Ringwulsts 5 vermieden werden, die eine zu starke Deformation des Dichtungsrings 11 zur Folge haben könnten.

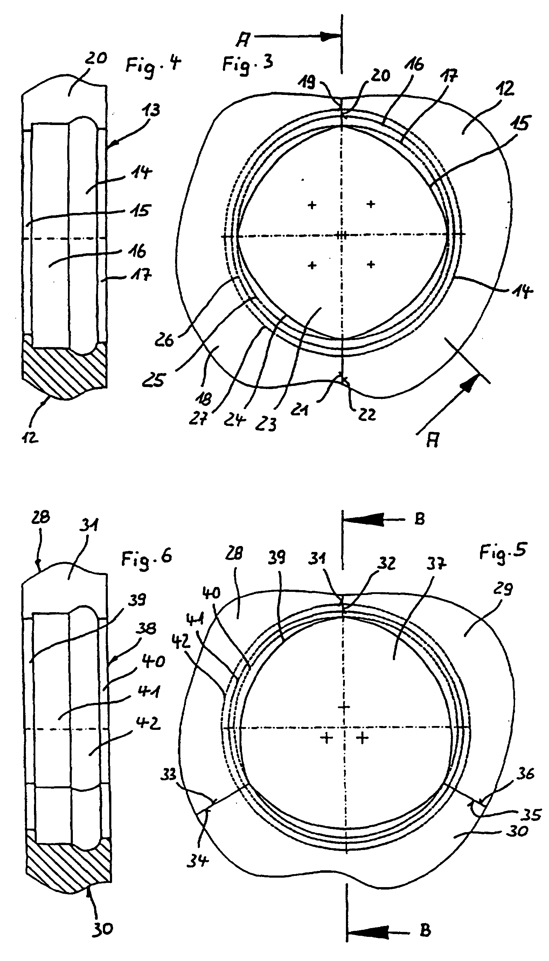

Eine entsprechende Gestaltung ergibt sich aus den Figuren 5 und 6. Figur 5 zeigt einen Preßringbereich eines Preßgeräts mit drei Preßbacken 28, 29, 30, die in der gezeigten Stellung an ihren Stirnseiten 31, 32, 33, 34, 35, 36 aneinander anliegen und einen Pressenraum 37 einschließen. Die in Figur 6 dargestellte Preßkontur 38 ist identisch mit derjenigen der Preßbacken 12 und 18 gemäß den Figuren 2 bis 4, so daß auf deren vorstehende Beschreibung Bezug genommen wird. In Figur 5 bezeichnet die zuinnerst liegende durchgezogene Linie die Kontur des Preßstegs 39, die einem gerundeten Dreieck gleicht. In den Bereichen der jeweils gegenüberliegenden Stirnseiten 31, 32 bzw. 33, 34 bzw. 35, 36 steht der Preßsteg 39 am wenigsten radial nach innen vor. Den maximalen Überstand hat er jeweils in der Mitte zwischen den Bereichen der gegenüberliegenden Stirnseiten 31, 32 bzw. 33, 34 bzw. 35, 36. Die - von innen nach außen gesehen - erste gestrichelte Linie zeigt den Verlauf des Führungsstegs 40, der kreisrund ist. Ebenfalls kreisrund ist der durch die zweite gestrichelte Linie symbolisierte Zylinderbereich 41 und der durch die dritte gestrichelte Linie symbolisierte Nutgrund der Preßringnut 42.

Für den Preßvorgang wird das jeweils verwendete Preßgerät - in diesem Fall das in den Figuren 3 und 4 dargestellte Preßgerät - mit den Preßbacken 12, 18 so an den Preßfitting 2 angesetzt, daß die Preßstege 15, 24 mit ihren radial am weitesten vorstehenden Bereichen an dem Zylinderabschnitt 3 des Preßfittings 2 zur Anlage kommen, und zwar so, daß sich die Preßringnuten 14, 27 auf der gleichen Höhe wie der Ringwulst 5 befinden. Dabei haben die jeweils benachbarten Paare von Stirnseiten 19, 20 bzw. 21, 22 noch Abstand zueinander. Im Anschluß daran werden die Preßbacken 12, 18 durch einen entsprechenden Antrieb mit Hebelkinematik radial nach innen zusammengefahren. Dabei graben sich die radial nach innen am weitesten vorstehenden Bereiche der Preßstege 15, 24 in den Zylinderabschnitt 3 ein. Es bildet sich eine Einschnürung 43 sowohl in dem Preßfitting 2 als auch in dem Rohr 1, und zwar in einem Abstand Tg zum benachbarten Ende des Preßfittings 2.

Annähernd gleichzeitig kommt der Ringwulst 5 in der Preßringnut 14, 27 zur Anlage, so daß auch der Ringwulst 5 radial nach innen verpreßt wird. Dabei kommt der Innenrand 9 des Wulststeges 8 an der Außenseite des Rohres 1 zur Anlage und formt bei weiterer Verpressung in das Rohr 1 eine Einschnürung 44 ein, bis der in Figur 2 dargestellte Endzustand erreicht ist.

Die Einschnürungen 43, 44 sind durch einen Scheitelpunkt 45 getrennt, von dem aus nach beiden Seiten hin radial nach innen gerichtete Schrägen 46, 47 bis zu den jeweils tiefsten Punkten der Einschnürungen 43, 44 gehen, die für die Einschnürung 43 im Bereich der Preßstege 15, 24 und für die Einschnürung 44 im Bereich des Wulststegs 8 liegen. Der Dichtungsring 11 wird dabei derart flachgedrückt, daß er nahezu über seinen gesamten Umfang abdichtend sowohl an der Ringnut 10 als auch an der Außenseite des Rohres 1 anliegt. Dabei ist es für die Dichtwirkung besonders vorteilhaft, daß der Dichtungsring 11 aufgrund des Abstands zwischen Preßsteg 15, 24 und Wulststeg 8 auf einer zum Scheitelpunkt 45 nach außen ansteigenden Konusfläche der Einschnürung 44 anliegt, denn hierdurch wird der Dichtungsring 11 derart verformt, daß er über einen möglichst großen Teil seines Umfangs abdichtend anliegt.

**Patentansprüche**

1.  Verfahren zur Verbindung eines Rohres (1) mit einem Preßfitting (2), das einen Zylinderabschnitt (3) und endseitig je einen radial nach außen vorstehenden Ringwulst (5) aufweist, der zum freien Ende des Preßfittings (2) einen radial nach innen gerichteten Wulststeg (8) hat und innenseitig eine Ringnut (10) bildet, in die ein Dichtungsring (11) eingelegt ist, wobei Preßfitting (2) und Rohr (1) zur Herstellung der Verbindung ineinandergeschoben und dann der Ringwulst (5) und der Zylinderabschnitt (3) unter plastischer Verformung auch des Rohres (1) radial derart nach innen verpreßt werden, daß in das Rohr (1) im Bereich des Ringwulstes (5) eine erste Einschnürung (44) und daneben eine zweite Einschnürung (43) durch Verpressen des Zylinderabschnitts (3) in einer solchen Entfernung von der ersten Einschnürung (44) eingeformt werden, daß die zweite Einschnürung (43) in ihrer Formgebung von der ersten Einschnürung (44) in der Weise getrennt ist, daß die erste Einschnürung (44) einen in Richtung auf die zweite radial nach außen ansteigenden Abschnitt (47) aufweist,
    **dadurch gekennzeichnet, daß** der Wulststeg (8) in das Rohr (1) unter Äusformung der ersten Einschnürung (44) eingepreßt wird.

2.  Verfahren nach Anspruch 1,
    **dadurch gekennzeichnet, daß** die Einschnürungen (43, 44) unmittelbar aneinander angrenzen.

3.  Verfahren nach Anspruch 1,
    **dadurch gekennzeichnet, daß** der Mittenabstand der Einschnürungen (43, 44) mindestens der axialen Erstreckung des Ringwulstes (5) entspricht.

**4.** Verfahren nach einem der Ansprüche 1 bis 3,
**dadurch gekennzeichnet, daß** der Mittenabstand (Tg) der Einschnürungen (43, 44) folgenden Bedingungen genügen:

$$Tg \leq \frac{Te + Sf}{2}$$

und

$$Tg \geq 3 \sqrt{Sf^3 \times 576 \times \left( \frac{Fpmax + Fpmin}{2} \right)} - Sf,$$

wobei Te der Abstand zwischen Rohrende und Fittingende, Sf die Wandstärke des Wulststeges (8) sowie Fpmin die minimale und Fpmax die maximale Einpreßtiefe der zweiten Einschnürung (43) ist.

**5.** Verfahren nach einem der Ansprüche 1 bis 4,
**dadurch gekennzeichnet, daß** die zweite Einschnürung (43) tiefer eingeformt wird als die erste Einschnürung (44).

**6.** Verfahren nach einem der Ansprüche 1 bis 5,
**dadurch gekennzeichnet, daß** der Außendurchmesser des Ringwulstes (5) um 6 bis 15 % verringert wird.

**7.** Verfahren nach einem der Ansprüche 1 bis 6,
**dadurch gekennzeichnet, daß** der Außendurchmesser des Rohres (1) in der ersten Einschnürung (44) um 4 bis 15 % verringert wird.

**8.** Verfahren nach einem der Ansprüche 1 bis 7,
**dadurch gekennzeichnet, daß** der Außendurchmesser des Zylinderabschnitts (3) um 10 bis 20 % verringert wird.

**9.** Verfahren nach einem der Ansprüche 1 bis 8,
**dadurch gekennzeichnet, daß** das Verpressen mit Hilfe eines Preßgeräts erfolgt, das wenigstens zwei Preßbakken (12, 18, 28, 29, 30) mit innenseitiger Preßkontur (13, 38) aufweist, die für den Verpreßvorgang um den Ringwulst (5) gelegt und dann mit Hilfe eines Geräteantriebs derart bewegt werden, daß das Preßfitting (2) und das Rohr (1) plastisch radial nach innen verformt werden, wobei die Preßkontur (13, 38) der Preßbacken (12, 18, 28, 29, 30) so beschaffen ist, daß Preßfitting (2) und Rohr (1) im Bereich der jeweils gegenüberliegenden Stirnseiten (19, 20; 21, 22; 31, 32; 33, 34; 35, 36) der Preßbacken (12, 18, 28, 29, 30) am wenigsten verformt werden.

**10.** Verfahren nach Anspruch 9,
**dadurch gekennzeichnet, daß** die Preßkontur (38) der Preßbakken (28, 29, 30) so beschaffen ist, daß Preßfitting (1) und Rohr (1) zu den Stirnseiten (31, 32; 33, 34; 35, 36) der Preßbacken (28, 29, 30) hin weniger verformt werden als im Mittenbereich der Preßbacken (28, 29, 30).

**11.** Verfahren nach Anspruch 9,
**dadurch gekennzeichnet, daß** Preßfitting (2) und Rohr (1) von zwei Preßbacken (12, 18) verpreßt werden, bei denen die Preßkontur (13) alle 90° von einem Punkt maximaler Verpressung zu einem Punkt minimaler Verpressung zumindest in Teilbereichen der Preßkontur (13) wechselt.

**12.** Verfahren einem der Ansprüche 1 bis 11,
**dadurch gekennzeichnet, daß** der Ringwulst (5) in axialer Richtung maximal um 15 % komprimiert wird.

**13.** Verfahren nach einem der Ansprüche 1 bis 12,
**dadurch gekennzeichnet, daß** der Außenradius des Bogenabschnitts (7) des Ringwulsts (5) bei der Verpressung nicht oder maximal um 10 % verringert wird.

**14.** Verfahren nach einem der Ansprüche 1 bis 13,

**dadurch gekennzeichnet, daß** die Einformung der ersten Einschnürung (44) mittels eines stumpfen Wulststegs (8) durchgeführt wird.

15. Kombination aus Preßfitting (2), Rohr (1) und Preßgerät zur Durchführung des Verfahrens nach einem der Ansprüche 1 bis 13, wobei das Preßfitting (2) über das Rohr (1) geschoben ist und einen Zylinderabschnitt (3) und endseitig je einen radial vorstehenden Ringwulst (5) mit einem zum freien Ende hin radial nach innen gerichteten Wulststeg (8) und einem innenseitig in die dortige Ringnut (10) eingelegten Dichtungsring (11) hat und wobei das Preßgerät mehrere Preßbakken (12, 18, 28, 29, 30) mit innenseitiger Preßkontur (13, 38) aufweist, die einen in Umfangsrichtung verlaufenden Preßbereich (14, 27, 42) für den Ringwulst (5) und einen in solchem Abstand dazu verlaufenden, radial nach innen vorstehenden Preßsteg (15, 24, 39) bildet, daß in der Endstellung nach dem Verpressen im Bereich des Ringwulstes (5) eine erste Einschnürung (44) in das Rohr (1) sowie in dem Zylinderabschnitt (3) und dem Rohr (1) zumindest in Teilbereichen des Umfangs eine in ihrer Formgebung von der ersten Einschnürung (44) getrennte zweite Einschnürung (43) eingeformt sind und die erste Einschnürung (44) einen in Richtung auf die zweite Einschnürung (43) radial nach außen ansteigenden Abschnitt (47) aufweist,
   **dadurch gekennzeichnet, daß** der Preßbereich (14, 27, 42) für den Ringwulst (5) so ausgebildet ist, daß der Wulststeg (8) in der Endstellung nach dem Verpressen in das Rohr (1) unter Ausformung der ersten Einschnürung (44) eingegraben ist.

16. Kombination nach Anspruch 15,
   **dadurch gekennzeichnet, daß** der Preßsteg (15, 24, 39) einen freien Abstand zum Preßbereich (14, 27, 42) für den Ringwulst (5) hat, der wenigstens der axialen Erstreckung des Preßbereichs (14, 27, 42) entspricht.

17. Kombination nach Anspruch 15 oder 16,
   **dadurch gekennzeichnet, daß** der Mittenabstand (Tg) der Einschnürungen (43, 44) folgenden Bedingungen genügen:

$$Tg \leq \frac{Te + Sf}{2}$$

und

$$Tg \geq 3\sqrt{Sf^3 \times 576 \times \left(\frac{Fpmax + Fpmin}{2}\right)} - Sf,$$

wobei Te der Abstand zwischen Rohrende und Fittingende, Sf die Wandstärke des Wulststeges (8) sowie Fpmin die minimale und Fpmax die maximale Einpreßtiefe der zweiten Einschnürung (43) ist.

18. Kombination nach einem der Ansprüche 15 bis 17,
   **dadurch gekennzeichnet, daß** die Preßkontur (13, 38) so ausgebildet ist, daß in der Endstellung nach dem Verpressen die zweite Einschnürung (43) zumindest über Teilbereiche des Umfangs tiefer ist als die erste Einschnürung (44).

19. Kombination nach einem der Ansprüche 15 bis 18,
   **dadurch gekennzeichnet, daß** die Preßkontur (13, 38) so ausgebildet ist, daß der Außendurchmesser des Ringwulstes (5) in der Endstellung nach dem Verpressen um 6 bis 15 % verringert ist.

20. Kombination nach Anspruch 15 bis 19,
   **dadurch gekennzeichnet, daß** der Außendurchmesser des Rohres (1) in der ersten Einschnürung (44) um 4 bis 15 % verringert ist.

21. Kombination nach einem der Ansprüche 15 bis 20,
   **dadurch gekennzeichnet, daß** die Preßkontur (13, 38) so ausgebildet ist, daß der Außendurchmesser des Zylinderabschnitts (3) des Preßfittings (2) in der Endstellung nach dem Verpressen um 10 bis 20 % verringert ist.

22. Kombination nach einem der Ansprüche 15 bis 21,

**dadurch gekennzeichnet, daß** die Preßkontur (13, 38) der Preßbacken (12, 18, 28, 29, 30) so geformt ist, daß der Radius der Preßkontur (13, 38) zu den gegenüberliegenden Stirnseiten (19, 20; 21, 22; 31, 32; 33, 34; 35, 36) der Preßbacken (12, 18, 28, 29, 30) zumindest in Teilbereichen am größten ist.

**23.** Kombination nach Anspruch 22,
**dadurch gekennzeichnet, daß** die Preßkontur (13, 38) der Preßbacken (12, 18, 28, 29, 30) so geformt ist, daß der Radius der Preßkontur (13, 38) im Mittenbereich zumindest teilweise am geringsten ist.

**24.** Kombination nach Anspruch 22,
**dadurch gekennzeichnet, daß** das Preßgerät zwei Preßbacken (12, 18) aufweist und der Radius der Preßkontur (13) in den Bereichen der jeweils gegenüberliegenden Stirnseiten (19, 20; 21, 22; 31, 32; 33, 34; 35, 36) der Preßbacken (12, 18, 28, 29, 30) und der Mittenbereiche am größten ist.

**25.** Kombination nach einem der Ansprüche 15 bis 24,
**dadurch gekennzeichnet, daß** der Preßbereich für den Ringwulst (5) als Preßringnut (14, 27, 42) ausgebildet ist, die an der dem Preßsteg (15, 24, 39) abgewandten Seite unter Bildung eines Führungsstegs (17, 25, 40) radial nach innen verlängert ist.

**26.** Kombination nach einem der Ansprüche 15 bis 25,
**dadurch gekennzeichnet, daß** der Preßbereich für den Ringwulst (5) als Preßringnut (14, 27, 42) ausgebildet ist, die an die Außenkontur des Ringwulstes (5) angepaßt ist.

**27.** Kombination nach Anspruch 26,
**dadurch gekennzeichnet, daß** der Radius der Preßringnut (14, 27, 42) dem Außenradius des Bogenabschnitts (7) des Ringwulstes (5) vor der Verpressung entspricht oder maximal 10 % geringer ist.

**28.** Kombination nach einem der Ansprüche 15 bis 27,
**dadurch gekennzeichnet, daß** der Wulststeg (8) am Innenrand (9) stumpf ausgebildet ist.

**Claims**

**1.** A method of joining a pipe (1) with a press fitting (2) which has a cylindrical portion (3) and, at each end, a radially outward-projecting annular beading (5) which has a radially inward-oriented bead shoulder (8) at the free end of the press fitting (2) and on the inside forms an annular channel (10), into which a sealing ring (11) is inserted, press fitting (2) and pipe (1) being pushed one into the other for making the connection and then the annular beading (5) and the cylindrical portion (3) being pressed radially inwards, with plastic deformation also of the pipe (1), to such an extent that a first necking (44) is formed in the pipe (1) in the region of the annular beading (5) and next to this first necking (44) a second necking (43) is formed by pressing the cylindrical portion (3) at such a distance from the first necking (44) that the configuration of the second necking (43) is separate from the first necking (44) and the first necking (44) has a portion (47) which slopes radially outwards in the direction of the second necking, **characterized in that** the bead shoulder (8) is pressed into the pipe (1) to form the first necking (44).

**2.** Method according to Claim 1,
**characterized in that** the neckings (43, 44) are directly adjacent to one another.

**3.** Method according to Claim 1,
**characterized in that** the centre-to-centre distance between the neckings (43, 44) corresponds to at least the axial extension of the annular beading (5).

**4.** Method according to one of Claims 1 to 3,
**characterized in that** the centre-to-centre distance (Tg) between the neckings (43, 44) satisfies the following conditions:

$$Tg \leq \frac{Te + Sf}{2}$$

and

$$Tg \geq 3 \sqrt{Sf^3 \times 576 \times \left(\frac{Fpmax + Fpmin}{2}\right)} - Sf,$$

Te being the distance between pipe end and fitting end, Sf being the wall thickness of the bead shoulder (8) and Fpmin being the minimum and Fpmax the maximum depth of indentation of the second necking (43).

5.  Method according to one of Claims 1 to 4,
    **characterized in that** the second necking (43) is more deeply recessed or indented than the first necking (44).

6.  Method according to one of Claims 1 to 5,
    **characterized in that** the external diameter of the annular beading (5) is reduced by 6 to 15%.

7.  Method according to one of Claims 1 to 6,
    **characterized in that** the external diameter of the pipe (1) is reduced by 4 to 15% in the first necking (44).

8.  Method according to one of Claims 1 to 7,
    **characterized in that** the external diameter of the cylindrical portion (3) is reduced by 10 to 20%.

9.  Method according to one of Claims 1 to 8,
    **characterized in that** the pressing is carried out by means of a pressing device, which has at least two pressing jaws (12, 18, 28, 29, 30), having an internal pressing contour (13, 38), said jaws being placed around the annular beading (5) for the pressing operation and then being moved by means of a device drive so that the press fitting (2) and the pipe (1) are plastically deformed radially inwards, the pressing contour (13, 38) of the pressing jaws (12, 18, 28, 29, 30) being such that press fitting (2) and pipe (1) are least deformed in the region of the respective opposite end faces (19, 20; 21, 22; 31, 32; 33, 34; 35, 36) of the pressing jaws (12, 18, 28, 29, 30).

10. Method according to Claim 9,
    **characterized in that** the pressing contour (38) of the pressing jaws (28, 29, 30) is such that press fitting (2) and pipe (1) are less deformed towards the end faces (31, 32; 33, 34; 35, 36) of the pressing jaws (28, 29, 30) than in the central area of the pressing jaws (28, 29, 30).

11. Method according to Claim 9,
    **characterized in that** the press fitting (2) and pipe (1) are pressed by two pressing jaws (12, 18), in which the pressing contour (13) changes every 90° from a point of maximum pressing to a point of minimum pressing, at least in parts of the pressing contour (13).

12. Method according to one of Claims 1 to 11,
    **characterized in that** the annular beading (5) is compressed in axial direction by a maximum of 15%.

13. Method according to one of Claims 1 to 12,
    **characterized in that** the external radius of the curved portion (7) of the annular beading (5) is not reduced or is reduced by a maximum of 10% during pressing.

14. Method according to one of Claims 1 to 13,
    **characterized in that** the first necking (44) is formed by means of a blunt shoulder (8) of the bead.

15. Combination of press fitting (2), pipe (1) and pressing device for implementing the method according to one of Claims 1 to 13, in which the press fitting (2) is pushed over the pipe (1) and has a cylindrical portion (3) and, at each end, a radially projecting annular beading (5) with, towards the free end, a bead shoulder (8) oriented radially inwards and a sealing ring (11) inserted inside the annular channel (10), and the pressing device has a plurality of pressing jaws (12, 18, 28, 29, 30) with internal pressing contour (13, 38) which forms a pressing region (14, 27, 42), running in circumferential direction, for the annular beading (5) and a pressing shoulder (15, 24, 39) projecting radially inwards and disposed at such a distance from the pressing region that, in the final position after the pressing operation, a first necking (44) is formed in the pipe (1) in the region of the annular beading (5) and a second necking (43) is formed in the cylindrical portion (3) and the pipe (1), at least in parts of the circumference, said second necking (43) being separately configured from the first necking (44) and the first necking (44) having a portion (47) which slopes radially outwards in direction of the second necking (43),
**characterized in that** the pressing region (14, 27, 42) for the annular beading (5) is formed so that, in the final position after pressing, the bead shoulder (8) is embedded in the pipe (1) to form the first necking (44).

16. Combination according to Claim 15,
**characterized in that** the pressing shoulder (15, 24, 39) is a clear distance away from the pressing region (14, 27, 42) for the annular beading (5) which corresponds to at least the axial extension of the pressing region (14, 27, 42).

17. Combination according to Claim 15 or 16,
**characterized in that** the centre-to-centre distance (Tg) between the neckings (43, 44) satisfies the following conditions:

$$Tg \leq \frac{Te + Sf}{2}$$

and

$$Tg \geq 3\sqrt{Sf^3 \times 576 \times \left(\frac{Fpmax + Fpmin}{2}\right)} - Sf,$$

Te being the distance between pipe end and fitting end, Sf being the wall thickness of the bead shoulder (8) and Fpmin being the minimum and Fpmax the maximum depth of indentation of the second necking (43).

18. Combination according to one of Claims 15 to 17,
**characterized in that** the pressing contour (13, 38) is formed so that, in the final position after pressing, the second necking (43) is more deeply recessed or indented, at least over parts of the circumference, than the first necking (44).

19. Combination according to one of Claims 15 to 18,
**characterized in that** the pressing contour (13, 38) is formed so that, in the final position after pressing, the external diameter of the annular beading (5) is reduced by 6 to 15%.

20. Combination according to Claims 15 to 19,
**characterized in that** in the first necking (44) the external diameter of the pipe (1) is reduced by 4 to 15%.

21. Combination according to one of Claims 15 to 20,
**characterized in that** the pressing contour (13, 38) is formed so that, in the final position after pressing, the external diameter of the cylindrical portion (3) of the press fitting (2) is reduced by 10 to 20%.

22. Combination according to one of Claims 15 to 21,
**characterized in that** the pressing contour (13, 38) of the pressing jaws (12, 18, 28, 29, 30) is formed so that the radius of the pressing contour (13, 38) is greatest, at least in some areas, towards the opposite end faces (19, 20; 21, 22; 31, 32; 33, 34; 35, 36) of the pressing jaws (12, 18, 28, 29, 30).

23. Combination according to Claim 22,
**characterized in that** the pressing contour (13, 38) of the pressing jaws (12, 18, 28, 29, 30) is formed so that the radius of the pressing contour (13, 38) is smallest, at least in some areas, in the central region.

24. Combination according to Claim 22,
**characterized in that** the pressing device has two pressing jaws (12, 18) and the radius of the pressing contour (13) is greatest in the areas of the respective opposite end faces (19, 20; 21, 22; 31, 32; 33, 34; 35, 36) of the pressing jaws (12, 18, 28, 29, 30) and the central regions.

**25.** Combination according to one of Claims 15 to 24,
**characterized in that** the pressing region for the annular beading (5) is formed as an annular pressing groove (14, 27, 42) which is extended radially inwards on the side facing away from the pressing shoulder (15, 24, 39) so as to form a guide shoulder (17, 25, 40).

**26.** Combination according to one of Claims 15 to 25,
**characterized in that** the pressing region for the annular beading (5) is formed as an annular pressing groove (14, 27, 42) which is adapted to the external contour of the annular beading (5).

**27.** Combination according to Claim 26,
**characterized in that**, prior to pressing, the radius of the annular pressing groove (14, 27, 42) corresponds to the external radius of the curved portion (7) of the annular beading (5) or is smaller by a maximum of 10%.

**28.** Combination according to one of Claims 15 to 27,
**characterized in that** the bead shoulder (8) has a blunt inner edge (9).


**Revendications**

**1.** Procédé de liaison d'un tuyau (1) avec un raccord (2) emmanché à la presse, qui présente un tronçon cylindrique (3) et, aux extrémités, un bourrelet annulaire respectif (5) saillant radialement vers l'extérieur, muni d'une membrure bombée (8) dirigée radialement vers l'intérieur par rapport à l'extrémité libre du raccord (2) emmanché à la presse, et formant intérieurement une gorge annulaire (10) dans laquelle une bague d'étanchement (11) est insérée, le raccord (2) emmanché à la presse et le tuyau (1) étant emboîtés l'un dans l'autre en vue d'établir la liaison, puis le bourrelet annulaire (5) et le tronçon cylindrique (3) étant comprimés radialement vers l'intérieur, avec déformation plastique impliquant également le tuyau (1), de manière qu'un premier resserrement (44) soit formé dans le tuyau (1), dans la région du bourrelet annulaire (5), et qu'un second resserrement (43) soit formé en juxtaposition, par compression du tronçon cylindrique (3), en étant éloigné du premier resserrement (44) d'une distance telle que la configuration du second resserrement (43) diffère de celle du premier resserrement (44) en ce sens que ledit premier resserrement (44) comporte un segment (47) montant vers l'extérieur, dans le sens radial, en direction dudit second resserrement,
**caractérisé par le fait que** la membrure bombée (8) est emmanchée à force dans le tuyau (1), avec déformation du premier resserrement (44).

**2.** Procédé selon la revendication 1,
**caractérisé par le fait que** les resserrements (43, 44) sont directement adjacents.

**3.** Procédé selon la revendication 1,
**caractérisé par le fait que** la distance, séparant les centres des resserrements (43, 44) correspond au moins à l'étendue axiale du bourrelet annulaire (5).

**4.** Procédé selon l'une des revendications 1 à 3,
**caractérisé par le fait que** la distance (Tg) séparant les centres des resserrements (43, 44) satisfait aux conditions suivantes :

$$Tg \leq \frac{Te + Sf}{2}$$

et

$$Tg \geq 3 \ \sqrt{Sf^3 \times 576 \times \left( \frac{Fpmax + Fpmin}{2} \right)} - Sf,$$

sachant que Te est la distance entre l'extrémité du tuyau et l'extrémité du raccord, et Sf est l'épaisseur de paroi de la membrure bombée (8), Fpmin et Fpmax étant les profondeurs de compression respectivement minimale et maximale du second resserrement (43).

5. Procédé selon l'une des revendications 1 à 4,
**caractérisé par le fait que** le second resserrement (43) est ménagé d'une plus grande profondeur que le premier resserrement (44).

6. Procédé selon l'une des revendications 1 à 5,
**caractérisé par le fait que** le diamètre extérieur du bourrelet annulaire (5) est diminué de 6 à 15 %.

7. Procédé selon l'une des revendications 1 à 6,
**caractérisé par le fait que** le diamètre extérieur du tuyau (1) est diminué de 4 à 15 % dans le premier resserrement (44).

8. Procédé selon l'une des revendications 1 à 7,
**caractérisé par le fait que** le diamètre extérieur du tronçon cylindrique (3) est diminué de 10 à 20 %.

9. Procédé selon l'une des revendications 1 à 8,
**caractérisé par le fait que** la compression s'opère à l'aide d'un appareil de pressage comportant au moins deux mâchoires de pressage (12, 18, 28, 29, 30) à profil intérieur de pressage (13, 38) qui, en vue du processus de compression, sont placées autour du bourrelet annulaire (5) et sont ensuite mises en mouvement, à l'aide d'un entraînement de l'appareil, de telle sorte que le raccord (2) emmanché à la presse et le tuyau (1) soient plastiquement déformés vers l'intérieur, dans le sens radial, le profil de pressage (13, 38) desdites mâchoires de pressage (12, 18, 28, 29, 30) étant agencé de façon telle que ledit raccord (2) emmanché à la presse et ledit tuyau (1) soient déformés au minimum dans la région des faces extrêmes respectives mutuellement opposées (19, 20 ; 21, 22 ; 31, 32 ; 33, 34 ; 35, 36) des mâchoires de pressage (12, 18, 28, 29, 30).

10. Procédé selon la revendication 9,
**caractérisé par le fait que** le profil de pressage (38) des mâchoires de pressage (28, 29, 30) est agencé de façon telle que le raccord (2) emmanché à la presse et le tuyau (1) soient moins déformés, en direction des faces extrêmes (31, 32 ; 33, 34 ; 35, 36) desdites mâchoires de pressage (28, 29, 30), que dans la région centrale desdites mâchoires de pressage (28, 29, 30).

11. Procédé selon la revendication 9, **caractérisé par le fait que** le raccord (2) emmanché à la presse et le tuyau (1) sont comprimés par deux mâchoires de pressage (12, 18) dont le profil de pressage (13) passe alternativement, tous les 90°, d'un point de compression maximale à un point de compression minimale, au moins dans des zones partielles dudit profil de pressage (13).

12. Procédé selon l'une des revendications 1 à 11,
**caractérisé par le fait que** le bourrelet annulaire (5) est comprimé au maximum de 15 % dans la direction axiale.

13. Procédé selon l'une des revendications 1 à 12,
**caractérisé par le fait que** le rayon extérieur de la région (7) en arc de cercle du bourrelet annulaire (5) accuse une diminution nulle, ou de 10 % au maximum lors de. la compression.

14. Procédé selon l'une des revendications 1 à 13,
**caractérisé par le fait que** l'empreinte du premier resserrement (44) est exécutée au moyen d'une membrure bombée (8) émoussée.

15. Combinaison d'un raccord (2) emmanché à la presse, d'un tuyau (1) et d'un appareil de pressage, pour la mise en oeuvre du procédé selon l'une des revendications 1 à 13, ledit raccord (2) emmanché à la presse étant enfilé sur ledit tuyau (1), et étant muni d'un tronçon cylindrique (3) et, aux extrémités, d'un bourrelet annulaire respectif (5) saillant radialement et comportant une membrure bombée (8) orientée radialement vers l'intérieur en direction de l'extrémité libre, et une bague d'étanchement (11) insérée dans la gorge annulaire (10) située dans ladite membrure ; et ledit appareil de pressage comprenant plusieurs mâchoires de pressage (12, 18, 28, 29, 30) à profil intérieur de pressage (13, 38) qui forme une zone de pressage (14, 27, 42) destinée au bourrelet annulaire (5) et s'étendant dans la direction périphérique, et une nervure de pressage (15, 24, 39) saillant radialement vers l'intérieur et s'étendant, vis-à-vis de ladite zone, à une distance telle que, dans la position extrême à l'issue de la compression, un premier resserrement (44) soit ménagé dans le tuyau (1), dans la région du bourrelet annulaire (5), et qu'un second resserrement (43), dont la configuration diffère de celle dudit premier resserrement (44), soit ménagé dans le tronçon cylindrique (3) et dans ledit tuyau (1), au moins dans des zones partielles du pourtour, et que ledit premier resserrement (44) présente un segment (47) montant vers l'extérieur, dans le sens radial, en direction du second resserrement (43),

**caractérisée par le fait que** la zone de pressage (14, 27, 42) destinée au bourrelet annulaire (5) est réalisée de telle sorte que la membrure bombée (8) soit creusée dans le tuyau (1), dans la position extrême à l'issue de la compression, avec déformation du premier resserrement (44).

16. Combinaison selon la revendication 15,
**caractérisée par le fait que** la nervure de pressage (15, 24, 39) présente, vis-à-vis de la zone de pressage (14, 27, 42) destinée au bourrelet annulaire (5), un espacement libre correspondant au moins à l'étendue axiale de ladite zone de pressage (14, 27, 42).

17. Combinaison selon la revendication 15 ou 16,
**caractérisée par le fait que** la distance (Tg) séparant les centres des resserrements (43, 44) satisfait aux conditions suivantes :

$$Tg \leq \frac{Te + Sf}{2}$$

et

$$Tg \geq 3 \sqrt{Sf^3 \times 576 \times \left(\frac{Fpmax + Fpmin}{2}\right)} - Sf,$$

sachant que Te est la distance entre l'extrémité du tuyau et l'extrémité du raccord, et Sf est l'épaisseur de paroi de la membrure bombée (8), Fpmin et Fpmax étant les profondeurs de compression respectivement minimale et maximale du second resserrement (43).

18. Combinaison selon l'une des revendications 15 à 17,
**caractérisée par le fait que** le profil de pressage (13, 38) est réalisé de façon telle que, dans la position extrême à l'issue de la compression, le second resserrement (43) soit plus profond que le premier resserrement (44), au moins sur des zones partielles du pourtour.

19. Combinaison selon l'une des revendications 15 à 18,
**caractérisée par le fait que** le profil de pressage (13, 38) est réalisé de telle sorte que le diamètre extérieur du bourrelet annulaire (5) soit diminué de 6 à 15 % dans la position extrême, à l'issue de la compression.

20. Combinaison selon les revendications 15 à 19,
**caractérisée par le fait que** le diamètre extérieur du tuyau (1) est diminué de 4 à 15 % dans le premier resserrement (44).

21. Combinaison selon l'une des revendications 15 à 20,
**caractérisée par le fait que** le profil de pressage (13, 38) est réalisé de telle sorte que le diamètre extérieur du tronçon cylindrique (3) du raccord (2) emmanché à la presse soit diminué de 10 à 20 % dans la position extrême, à l'issue de la compression.

22. Combinaison selon l'une des revendications 15 à 21,
**caractérisée par le fait que** le profil de pressage (13, 38) des mâchoires de pressage (12, 18, 28, 29, 30) est configuré de façon telle que le rayon dudit profil de pressage (13, 38) soit maximal vis-à-vis des faces extrêmes opposées (19, 20 ; 21, 22 ; 31, 32 ; 33, 34 ; 35, 36) desdites mâchoires de pressage (12, 18, 28, 29, 30), au moins dans des zones partielles.

**23.** Combinaison selon la revendication 22,
**caractérisée par le fait que** le profil de pressage (13, 38) des mâchoires de pressage (12, 18, 28, 29, 30) est configuré de façon telle que le rayon dudit profil de pressage (13, 38) soit au moins partiellement minimal dans la région centrale.

**24.** Combinaison selon la revendication 22,
**caractérisée par le fait que** l'appareil de pressage comprend deux mâchoires de pressage (12, 18), et le rayon du profil de pressage (13) est maximal au voisinage des faces extrêmes respectivement opposées (19, 20 ; 21, 22 ; 31, 32 ; 33, 34 ; 35, 36) desdites mâchoires de pressage (12, 18, 28, 29, 30), et des régions centrales.

**25.** Combinaison selon l'une des revendications 15 à 24,
**caractérisée par le fait que** la zone de pressage destinée au bourrelet annulaire (5) est réalisée sous la forme d'une saignée annulaire de pressage (14, 27, 42) prolongée radialement vers l'intérieur, du côté tourné à l'opposé de la nervure de pressage (15, 24, 39), en formant une nervure de guidage (17, 25, 40).

**26.** Combinaison selon l'une des revendications 15 à 25,
**caractérisée par le fait que** la zone de pressage destinée au bourrelet annulaire (5) est réalisée sous la forme d'une saignée annulaire de pressage (14, 27, 42) adaptée au profil extérieur dudit bourrelet annulaire (5).

**27.** Combinaison selon la revendication 26,
**caractérisée par le fait que**, préalablement à la compression, le rayon de la saignée annulaire de pressage (14, 27, 42) correspond au rayon extérieur de la région (7) en arc de cercle du bourrelet annulaire (5), ou est au maximum de 10 % inférieur audit rayon extérieur.

**28.** Combinaison selon l'une des revendications 15 à 27,
**caractérisée par le fait que** la membrure bombée (8) est de réalisation émoussée sur le bord intérieur (9).

Fig. 1

Fig. 2

Fig. 4

Fig. 3

Fig. 6

Fig. 5